Europäisches Patentamt

European Patent Office

Office européen des brevets

(11) Numéro de publication: **0 323 360**
**A1**

## (12) DEMANDE DE BREVET EUROPEEN

(21) Numéro de dépôt: 88403365.5

(22) Date de dépôt: 29.12.88

(51) Int. Cl.⁴: **F 16 L 3/12**
H 02 G 3/04, H 02 G 3/24

(30) Priorité: 30.12.87 FR 8718429
05.10.88 FR 8813048

(43) Date de publication de la demande:
05.07.89 Bulletin 89/27

(84) Etats contractants désignés:
AT BE CH DE ES FR GB GR IT LI LU NL SE

(71) Demandeur: CONCEPTION, FAISABILITE,
REALISATIONS PLASTIQUES
22, route de Soissons Z.I. Atochem
F-02300 Chauny (FR)

Verhelle, Antoine
9, Cartier de la Fontaine
F-59400 Tilloy-les-Cambrai (FR)

(72) Inventeur: Lavandier, Noel
15, rue Marc Labruyère Bichancourt
F-02300 Chauny (FR)

Verhelle, Antoine
9 Cartier de la Fontaine
F-59400 Tilloy-les-Cambrai (FR)

(74) Mandataire: Casalonga, Axel et al
BUREAU D.A. CASALONGA - JOSSE Morassistrasse 8
D-8000 Munich 5 (DE)

(54) Support de fixation de cable.

(57) Support pour la fixation d'un câble sur une surface, comprenant une bande plate (1) rectiligne portant, réparties sur sa longueur, plusieurs parties (2) de retenue de câble par pincement, séparées par des sections de bande dépourvues de parties de retenue, des trous de passage (6) pour des moyens de fixation (agrafes, clous) étant prévus entre les parties de retenue de câble (2). L'ensemble du support est avantageusement réalisé d'une seule pièce en matière plastique.

FIG.2

EP 0 323 360 A1

Bundesdruckerei Berlin

**Description**

## SUPPORT DE FIXATION DE CABLE.

La présente invention se rapporte à un support pour la fixation à une surface d'un câble qui peut être un câble électrique ou à fibres optiques de transmission d'informations, par exemple un câble téléphonique, de télévision, etc., un câble de transmission d'énergie, etc.

Jusqu'à présent, la fixation de tels câbles s'effectue généralement par collage, directement par agrafage, à l'aide de cavaliers, de crochets et de pointes, ou à l'aide de colliers de serrage solidarisés avec la surface au moyen de pointes, de vis, etc.

Le collage ne permet pas toujours une fixation très fiable, en fonction de la nature et de l'état de la surface, ne permet pas une pose très esthétique et nécessite l'utilisation d'un pistolet chauffant. Les modes de fixation utilisant des éléments de fixation métalliques sont souvent difficiles à mettre en oeuvre dans des endroits difficilement accessibles, par exemple dans des angles, peuvent provoquer des perturbations dans les transmissions, notamment par contact des agrafes de fixation avec les conducteurs des câbles et nécessitent une surface permettant l'enfoncement des agrafes, cavaliers, pointes, etc. La fixation par colliers de serrage est relativement lente et d'un coût élevé. Enfin, un inconvénient commun à tous les modes de fixation actuels réside dans le fait qu'ils ne permettent que difficilement une pose parfaitement rectiligne d'un câble.

La présente invention a pour objet un support de fixation de câble qui, tout en étant d'un prix de revient réduit, permet une pose simple, rapide et sûre d'un câble, quels que soient la nature et l'état de la surface.

Un autre objet de l'invention est de réaliser un support de fixation peu visible et efficace pour la pose d'un câble.

L'invention a également pour objet un support de fixation de câble permettant une pose parfaitement rectiligne d'un câble.

L'invention a en outre pour objet un support de fixation de câble permettant de poser de façon parfaitement parallèle plusieurs câbles côte à côte.

Conformément à l'invention, le support de fixation pour câble, notamment pour câble de télécommunications, est de faible taille et de forme très effilée. Ce support comprend des moyens de retenue de câble reliés à une base en forme de bande plate. Les moyens de retenue comportent au moins un clip dont les branches sont solidaires des côtés longitudinaux de la base. Les faces internes des branches du clip forment avantageusement une surface cylindrique d'angle supérieur à 180° et de section sensiblement identique à la section du câble, de façon à bloquer ledit câble par pincement avec déformation élastique des branches du clip. La base est munie de trous de passage pour des moyens de fixation tels que agrafes, clous, vis. Les trous sont de préférence alignés dans le sens longitudinal et à l'extérieur des moyens de retenue de câble.

La base du support est pourvue, sur sa face de retenue, d'un évidement médian longitudinal débouchant sur ses extrémités. La face concave de l'évidement présente, de préférence, une section en arc de cercle d'angle inférieur à 180° et de diamètre sensiblement égal à celui du câble.

La base peut être munie d'une rainure médiane longitudinale au fond de l'évidement et débouchant sur les extrémités de la base.

La longueur des branches du clip est de préférence inférieure à celle de la base en forme de bande. Les extrémités dépassantes de la base peuvent être pourvues, de part et d'autre du clip, chacune, d'un ou de deux trous de fixation au fond de la rainure et traversant la base perpendiculairement à la face de retenue.

Chaque branche du clip peut présenter le long de son côté libre un bord incliné formant entrée évasée pour faciliter l'introduction du câble dans le clip.

La face de fixation de la base, à l'opposé de la fade de retenue, peut présenter deux nervures le long des côtés longitudinaux.

D'une manière générale, le support est constitué par une seule pièce en matière isolante. De préférence, le support est réalisé en matière plastique transparente.

Selon un mode préféré de réalisation de l'invention, le support comprend une bande plate rectiligne portant, réparties sur sa longueur, plusieurs parties formant clips de retenue de câble par pincement avec déformation élastique (clipsage) séparées par des sections de bande dépourvues de parties de retenue de câble.

Le support conforme à l'invention qui peut être réalisé par exemple en plusieurs longueurs, par exemple de 0,5 et 1 mètre, est fixé à la surface par des moyens usuels quelconques, par exemple par collage ou par clouage ou agrafage à l'endroit des sections de bande dépourvues de parties de retenue de câble, permettant par conséquent le libre accès des outils pour la pose des moyens de fixation (clous, agrafes). Ce n'est qu'après cette fixation que le câble est posé en étant simplement encliqueté (clipsé) dans les parties de retenue du support.

Les parties de retenue de câble sont réalisées d'une seule pièce avec la bande ou sont rapportées sur cette dernière.

Le support dans son ensemble peut être réalisé en matière plastique, par extrusion et/ou injection.

De préférence, la bande comporte, entre les parties de retenue de câble, des trous de passage pour des moyens de fixation (agrafes, clous).

Afin que les moyens de fixation (agrafes, clous) ne dépassent pas, après leur enfoncement, la face extérieure de la bande contre laquelle vient porter le câble, il est avantageux que la bande comporte une ouverture longitudinale continue traversant la bande sur toute sa longueur au droit des trous de fixation. Cette ouverture longitudinale procure à la bande une souplesse grâce à laquelle les parties normalement saillantes des moyens de fixation (agrafes, clous) peuvent être enfoncées dans l'épaisseur de la bande.

Cette ouverture longitudinale présente avantageusement une largeur supérieure au diamètre des trous de fixation.

Pour améliorer la pose des supports, il est avantageux que la bande de chaque support comporte à ses deux extrémités des moyens de raccordement à des supports adjacents. Ainsi, lors de leur fixation, les supports posés de façon jointive sont parfaitement alignés, grâce à ces moyens de raccordement.

Les moyens de raccordement des supports peuvent de préférence comprendre une tête en saillie dans le plan de la bande, à une extrémité de cette dernière, et une échancrure correspondant à l'autre extrémité.

Afin de permettre la pose de plusieurs câbles parallèles, il est avantageux que la bande de chaque support comporte, sur ses deux côtés, des moyens de positionnement coopérant avec des moyens correspondants des supports juxtaposés.

Ces moyens de positionnement peuvent comprendre, par exemple, une rainure sur un côté et une languette sur l'autre côté de la bande.

En se référant aux dessins annexés, on va décrire ci-après plus en détail, un mode de réalisation illustratif et non limitatif d'un support de câble conforme à l'invention; sur les dessins :

la figure 1 est une vue en élévation latérale d'un support de câble conforme à l'invention;

la figure 2 est une vue en plan du support de la figure 1;

la figure 3 est une coupe, à plus grande échelle, suivant III-III de la figure 2;

la figure 4 est une coupe, à plus grande échelle, suivant IV-IV de la figure 2;

la figure 5 est une vue de côté d'un support de fixation pour câble selon l'invention;

la figure 6 est une vue de dessus du support de fixation de la figure 5; et

la figure 7 est une vue en coupe du support de fixation selon VII-VII de la figure 5.

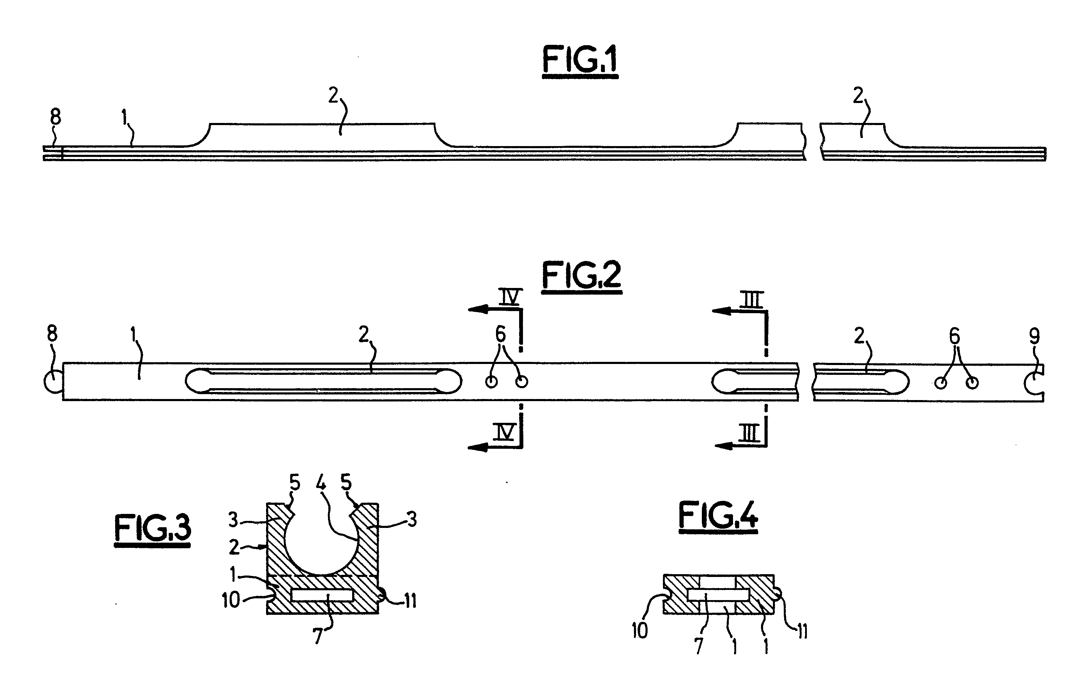

Un support de câble tel qu'illustré par les figures 1 et 2 comprend une bande 1 plate allongée, de section générale rectangulaire. La bande 1 comporte, réparties sur sa longueur, plusieurs parties de retenue de câble 2 faisant saillie sur une face de la bande 1. Les parties de retenue du câble 2 sont des parties discrètes et sont séparées les unes des autres par des sections de bande 3 dépourvues de parties de retenue 2.

Chaque partie de retenue de câble 2 réalisée d'une seule pièce avec la bande 1 présente, tel que cela paraît surtout sur la figure 3, la forme d'une pince (clip) en U comprenant deux branches 3 définissant entre elles une échancrure 4 constituant un arc de cercle de plus de 180°, la largeur de l'ouverture de la pince aux extrémités libres des branches 3 étant inférieure au diamètre du câble à fixer.

Ainsi, lors de l'enfoncement d'un câble non représenté dans la pince 2 depuis l'ouverture de cette dernière, enfoncement qui est facilité par des rampes 5 prévues aux extrémités libres des branches 3, ces dernières fléchissent élastiquement vers l'extérieur pour reprendre ensuite élastiquement leur position initiale lorsque le câble se trouve à l'intérieur de l'échancrure 4, retenant ainsi ce dernier en position.

La bande 1 comporte, entre les parties de retenue 2 ainsi qu'entre au moins une extrémité et la partie de retenue 2 la plus proche de cette extrémité, des trous de passage 6 pour des éléments de fixation qui peuvent être, par exemple, des clous ou des agrafes. Pour la fixation à l'aide d'agrafes, les trous sont toujours disposés par deux, leur entraxe correspondant à la largeur des agrafes.

La bande 1 est par ailleurs traversée longitudinalement, sur toute sa longueur, par une ouverture 7 rectangulaire passant au droit des trous 6. Cette ouverture 7 donne à la bande 1 une souplesse grâce à laquelle les têtes des clous de fixation non représentées, ou les têtes des agrafes, peuvent être enfoncées dans la bande 1 de manière à ne pas faire saillie sur la face supérieure de cette dernière.

La bande 1 comporte, par ailleurs, à une extrémité longitudinale, une tête 8 en saillie dans le plan de la bande 1, et à l'extrémité opposée une échancrure 9 de forme correspondante. Cela permet de raccorder entre elles les bandes 1 successives, de manière à assurer une pose parfaitement alignée des supports successifs.

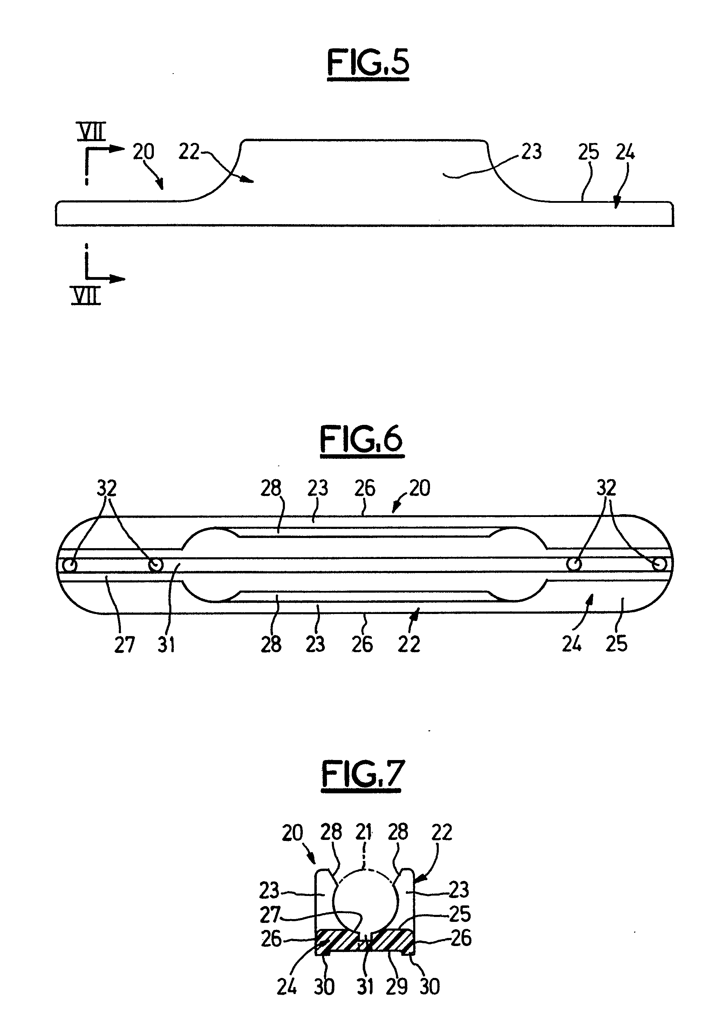

Il apparaît, par ailleurs, notamment sur les figures 3 et 4, que la bande 1 est munie sur toute sa longueur, sur un côté d'une rainure 10, par exemple de profil demi-circulaire et sur le côté opposé, d'une nervure 11 de profil correspondant. Lors de la pose juxtaposée de plusieurs supports en vue de la pose parallèle de plusieurs câbles, les rainures 10 et les nervures 11 des bandes d'un de ces supports peuvent ainsi s'interpénétrer et assurer un positionnement parfait des supports les uns par rapport aux autres.

Le support conforme à l'invention tel que représenté est réalisé d'une seule pièce en matière plastique isolante, en des longueurs pouvant être choisies à volonté. La fabrication peut se faire par exemple par extrusion ou par injection.

Bien entendu, le mode de réalisation représenté et décrit n'a été donné qu'à titre d'exemple illustratif et non limitatif et de nombreuses modifications et variantes sont possibles dans le cadre de l'invention.

Ainsi, les parties de retenue 2 qui, dans le mode de réalisation illustré, présentent une longueur sensiblement égale à celle des sections de bande dépourvues de parties de retenue, pourraient également être plus courtes ou plus longues.

Par ailleurs, l'ouverture de passage longitudinale 7 pourrait être supprimée, notamment en cas de fabrication par moulage par injection.

Au lieu de réaliser les parties de retenue de câble 2 d'une seule pièce avec la bande 1, elles pourraient également être fabriquées séparément de la bande avec des moyens de fixation, par exemple une nervure en queue d'aronde ou analogue, pour leur fixation par exemple par clipsage sur la bande pourvue de moyens complémentaires, par exemple d'une rainure en queue d'aronde ou analogue. Si cette rainure de la bande est continue sur toute la longueur, ce qui facilite sa fabrication par extrusion, les parties de retenue qui peuvent être fabriquées par exemple par injection, peuvent être réparties à volonté sur la longueur de la bande. La fabrication des parties de retenue séparément de la bande présente, en outre, l'avantage qu'il est possible de fixer des parties de retenue prévues pour des câbles de diamètres différents sur des bandes d'un seul type.

Bien entendu, si la surface de pose le permet, le support conforme à l'invention peut également être fixé par collage. Dans tous les cas, la fixation se trouve améliorée par le fait que le support peut être fixé en plusieurs endroits répartis sur sa longueur, ce qui rend la fixation moins dépendante de l'état de la surface que dans le cas d'une pose de câble avec des moyens de fixation discrets.

Tel qu'il est illustré sur les figures 5 à 7, le support 20 pour la fixation d'un câble 21 comporte un clip 22 de retenue de câble par pincement avec déformation élastique de ses deux branches 23, et une base 24 en forme de bande, portant solidairement sur une face de retenue 25 les branches 23 le long des côtés longitudinaux 26.

La base 24 est pourvue longitudinalement, sur sa face de retenue, d'un évidement médian 27 débouchant sur ses extrémités. La face concave de cet évidement médian 27 présente une section en arc de cercle d'angle inférieur à 180° et de diamètre sensiblement égal à celui du câble 21. Les faces internes des branches 23 du clip 22 présentent le même rayon de courbure que celui de l'évidement 27, de sorte que les faces internes des branches 23 et la face concave de l'évidement 27 forment une surface cylindrique d'angle supérieur à 180°, constituant la surface de retenue de câble. Le diamètre de cette surface cylindrique est sensiblement égal à celui du câble 21.

Le support 20 est réalisé de préférence en une seule pièce avec une matière plastique isolante et transparente.

Les extrémités libres des branches 23 présentent, de préférence, des bords inclinés 28 à l'ouverture du clip 22, définissant ainsi les faces de réception du câble 21 avant son enfoncement dans le clip 22.

Lors de l'enfoncement du câble 21 dans le clip 22, depuis l'ouverture de ce dernier, enfoncement qui est facilité par l'évasement de l'entrée entre les bords 28, les branches 23 fléchissent élastiquement vers l'extérieur en s'écartant l'une de l'autre jusqu'à permettre l'entrée du câble 21 qui vient alors en contact avec la surface de retenue du clip. Les branches 23 reprennent ensuite élastiquement leur position initiale, retenant ainsi le câble 21 à l'intérieur de la surface cylindrique de retenue.

La longueur des branches 23 dans l'axe du câble 21, correspond à peu près à la moitié de la longueur de la base 24 en forme de bande. Le clip 22 se trouve au milieu de la base 24, laissant ainsi deux extrémités libres de la base 24.

L'évidement médian 27 longitudinal prolonge la surface de retenue cylindrique du clip 22 jusqu'aux extrémités libres de la base 24. Le câble 21 est ainsi guidé par l'évidement médian 27 le long de la base 24.

Le support 20 présente une forme très effilée dont la largeur est à peine supérieur au diamètre du câble 21 à fixer. De plus, si le support 20 est réalisé en matière plastique transparente, sa présence est pratiquement invisible pour la fixation du câble 21, ce qui augmente considérablement l'aspect esthétique du câble 21 fixé sur une surface.

Dans la pratique, pour la fixation d'un câble téléphonique sur un mur par exemple, on a besoin d'une pluralité de supports de fixation 20 espacés les uns des autres le long du cheminement du câble.

La fixation d'un support 20 sur une surface peut être réalisée par collage. La face de fixation 29 de la base 24, à l'opposé de la face de retenue 25, peut présenter deux nervures 30 le long des côtés longitudinaux 26 de la base 24. Ces nervures 20 délimitent une surface plane légèrement en retrait et faisant partie de la face de fixation 29. On peut envisager de poser les supports 20 à l'aide d'un ruban adhésif double face dont la largeur est inférieure à celle délimitée par les nervures 30. Ce ruban adhésif permet ainsi d'avoir une pose rectiligne des supports 20 espacés les uns des autres et par conséquent une pose rectiligne du câble 21.

La base 24 peut également être pourvue d'une rainure médiane 31, longitudinale, située au fond de l'évidement 27 et débouchant sur les extrémités de la base 24. Chaque extrémité libre de la base 24 présente deux trous de fixation 32 au fond de la rainure 31. On peut ainsi fixer le support 20 sur une surface en utilisant des clous ou des agrafes à travers les trous de fixation 32. Pour la fixation à l'aide d'agrafes, les trous de fixation 32 présentent un entraxe correspondant à la largeur des agrafes. La profondeur de la rainure 31 doit être suffisante pour éviter tout dépassement d'agrafes ou de clous gênant la pose du câble 21 le long de l'évidement 27.

## Revendications

1. Support (20) pour la fixation d'un câble (21), notamment d'un câble de télécommunications, sur une surface, comprenant des moyens (2;22) de retenue de câble reliés à une base (1;24) en forme de bande plate, caractérisé par le fait que les moyens de retenue de câble comportent au moins un clip (2;22) dont les branches (3;23) sont solidaires des côtés longitudinaux de la base, les faces internes desdites branches (4;23) formant une surface cylindrique d'angle supérieur à 180° et de section sensiblement identique à la section du câble, de façon à bloquer ledit câble par pincement avec déformation élastique desdites branches du clip, et que la base est munie de trous de passage (6;32) pour des moyens de fixation tels que agrafes, clous, vis, lesdits trous étant alignés dans le sens longitudinal et disposés à l'extérieur des moyens de retenue de câble.

2. Support suivant la revendication 1, caractérisé par le fait que la base (24) est pourvue, sur sa face de retenue (25), d'un évidement médian (27) longitudinal, débouchant sur ses extrémités, la face concave de l'évidement présentant une section en arc de cercle d'angle inférieur à 180° et de diamètre égal à celui de la section de ladite surface cylindrique du clip de retenue de câble.

3. Support suivant la revendication 2, caractérisé par le fait que la base (24) est munie d'une rainure médiane (31) longitudinale au fond dudit évidement (27) et débouchant sur les extrémités de la base, les trous de fixation (32) se trouvant au fond de ladite rainure.

4. Support suivant l'une quelconque des revendications précédentes, caractérisé par le fait que chaque branche (3;23) du clip présente le long de son côté libre un bord incliné (5;28) évasant l'entrée pour faciliter l'introduction du câble (21) dans le clip (2;22).

5. Support suivant l'une quelconque des revendications précédentes, caractérisé par le fait que les moyens de retenue de câble sont constitués par une pluralité de parties (2) formant clips de retenue de câble par pincement avec déformation élastique, réparties sur la longueur de la base, et séparées par des sections de bande dépourvues de parties de retenue de câble.

6. Support suivant la revendication 5, caractérisé par le fait que la base en forme de bande plate comprend une tête (8) en saillie dans le plan de la bande à une extrémité de cette dernière et une échancrure (9) à l'autre extrémité.

7. Support suivant l'une quelconque des revendications précédentes, caractérisé par le fait que la base (1) comporte une rainure (10) sur un côté et une languette (11) sur l'autre côté de la bande.

8. Support suivant l'une quelconque des revendications précédentes, caractérisé par le fait qu'il est constitué par une seule pièce en matière isolante.

9. Support suivant la revendication 8, caractérisé par le fait qu'il est réalisé en matière plastique transparente.

10. Support suivant l'une quelconque des revendications 1 à 7, caractérisé par le fait que les parties de retenue (2) sont rapportées sur la bande (1).

EP 0 323 360 A1

## FIG.1

## FIG.2

## FIG.3

## FIG.4

## FIG.5

## FIG.6

## FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-U-8 109 164  (BROMSIEPE)<br>* Figures * | 1 | F 16 L  3/12<br>H 02 G  3/04<br>H 02 G  3/24 |
| A |  | 5,9,10 |  |
|  | --- |  |  |
| Y | US-A-3 576 304  (GILLEMOT)<br>* Figure 5 * | 1 |  |
| A |  | 5,9 |  |
|  | --- |  |  |
| A | US-A-4 437 633  (ANDRE)<br>* Figures * | 1,2,4,8,9 |  |
|  | --- |  |  |
| A | US-A-3 313 009  (BECKERER)<br>* Figure 2 * | 1,3,8,9 |  |
|  | --- |  |  |
| A | US-A-4 691 883  (KURIHARA)<br>* Figures * | 1,3,4,8,9 |  |
|  | --- |  |  |
| A | MACHINE DESIGN, vol. 53, no.1, 8 janvier 1981, page 44, Cleveland, Ohio, US; HUBEAU: "Interlocking fingers form flexible duct"<br>----- | 1 |  |

DOMAINES TECHNIQUES RECHERCHES (Int. Cl.4)

F 16 L
H 02 G

Le présent rapport a été établi pour toutes les revendications

| Lieu de la recherche | Date d'achèvement de la recherche | Examinateur |
|---|---|---|
| LA HAYE | 16-03-1989 | HUBEAU M.G. |